# EUROPÄISCHE PATENTANMELDUNG

(11) **EP 1 587 297 A1**
(43) Veröffentlichungstag der Anmeldung: **19.10.2005**
(21) Anmeldenummer: 05090097.6
(22) Anmeldetag: 08.04.2005
(51) Int. Cl.: H04N 1/04, H04N 5/253, H04N 9/11

(54) **Film-Scanner**

(30) Priorität: 15.04.2004 DE 102004018781
(71) Anmelder: KINOTON GmbH, D-82110 Germering bei München (DE); Deutsches Zentrum für Luft- und Raumfahrt e.V., 53175 Bonn (DE)
(72) Erfinder: Eckardt, Andreas, Dr., 12524 Berlin (DE); Dobler, Christoph, 82229 Seefeld (DE)
(74) Vertreter: Effert, Bressel und Kollegen

(57) **Zusammenfassung**

Die Erfindung betrifft einen Film-Scanner (1), umfassend eine breitbandige Bestrahlungsquelle (2) und eine Filmbühne (6), wobei die Filmbühne (6) mindestens einen Lichtdurchlass (10) für einen sichtbaren Spektralkanal aufweist und der Lichtdurchlass (10) auf mindestens einen photosensitiven Fotodetektor ausgerichtet ist, wobei der photosensitive Fotodetektor in einem Gehäuse (5) angeordnet ist, wobei die Filmbühne (6) mit dem Gehäuse (5) verbunden ist.

## Beschreibung

Die Erfindung betrifft einen Film-Scanner gemäß dem Oberbegriff des Anspruchs 1.

Ein Film-Scanner dient zur Umsetzung von kinematographischem Filmmaterial in digitale Daten.

Aus der DE 197 31 530 A1 ist ein Film-Scanner bzw. Filmabtaster bekannt, umfassend eine breitbandige Bestrahlungsquelle, mittels derer das entlang einer Filmbühne transportierte Filmmaterial durchleuchtet wird. Auf der der Bestrahlungsquelle abgewandten Seite der Filmbühne sind optoelektronische Detektoren zur Erfassung eines RGB-Bildes angeordnet. Des Weiteren ist auf der Seite der Bestrahlungsquelle eine weitere separate IR-Lichtquelle angeordnet, die beispielsweise als IR-LED ausgebildet ist. Der IR-Lichtquelle ist ebenfalls auf der anderen Seite der Filmbühne ein optischer Detektor zugeordnet. Die IR-Lichtquelle dient mit ihrem zugeordneten Detektor zur Perforationslocherkennung, anhand dessen eine Korrektur von Bildstandsfehlern vorgenommen werden kann. Zur Abschirmung der optischen Detektoren für das RGB-Bild vor der IR-Strahlung ist diesen ein Infrarotsperrfilter zugeordnet.

Der Erfindung liegt das technische Problem zugrunde, einen Film-Scanner zu schaffen, mittels dessen die geometrische Genauigkeit der Abtastung verbessert wird.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Hierzu ist der photosensitive Fotodetektor in einem Gehäuse angeordnet, wobei die Filmbühne mit dem Gehäuse verbunden ist. Hierdurch besteht eine feste mechanische Ausrichtung zwischen der Filmbühne mit dem Lichtdurchlass sowie dem Fotodetektor.

Dabei ist die Filmbühne über eine reproduzierbare, lösbare Verbindung oder über eine feste, starre Verbindung mit dem Gehäuse verbunden. Weiter ist in dem Gehäuse ein Objektiv angeordnet, mittels dessen der mindestens eine Lichtdurchlass optisch auf dem mindestens einen photosensitiven Fotodetektor abgebildet wird.

Dabei ist das Objektiv starr mit dem Gehäuse und/oder der Filmbühne verbunden. Hierdurch wird erreicht, dass alle für die exakte geometrische Ausrichtung notwendigen Bauelemente in einer baulichen Form zusammengefasst sind, so dass aufwendige Ausrichtungen entfallen und eine gleichbleibende Abbildungsqualität gewährleistet ist. Die breitbandige Bestrahlungsquelle ist dabei vorzugsweise außerhalb des Gehäuses angeordnet.

In einer bevorzugten Ausführungsform ist der photosensitive Fotodetektor als RGB-Zeilensensor ausgebildet. Dabei sind drei Zeilen mit jeweils einem R-, G- und B-Filter in einem Sensorgehäuse angeordnet. Der Abstand der drei Zeilen ist dabei derart gering, dass die drei Zeilen quasi die gleiche Szene erfassen. Dadurch können die drei Aufnahmen für die R-, G- und B-Zeile synchron erfolgen. Somit können Gleichlaufschwankungen eher toleriert werden, da zumindest die einzelnen R-, G-und B-Aufnahmen synchron sind. Der RGB-Zeilensensor kann dabei als CCD- oder CMOS-Zeilensensor ausgebildet sein.

In einer weiteren bevorzugten Ausführungsform sind den photosensitiven Fotodetektoren bzw. den Zeilen des RGB-Zeilensensors breitbandige Filter für Rot, Grün und Blau zugeordnet, die der Augenempfindlichkeit angepasst sind.

In einer weiteren bevorzugten Ausführungsform ist in dem Gehäuse zwischen der Filmbühne und dem photosensitiven Fotodetektor ein Graufilter-Einschub angeordnet. Mit Hilfe des Graufiltereinschubes ist man in der Lage, die Transmission des Filmes während des Abgleichens der breitbandigen Bestrahlungsquelle nachzubilden, so dass die volle radiometrische Auflösung des Fotodetektors ausgenutzt werden kann. Nach dem Abgleich wird dann der Graufilter entfernt. Die breitbandige Bestrahlungsquelle ist dabei vorzugsweise als Weißlichtquelle ausgebildet.

In einer weiteren bevorzugten Ausführungsform ist zwischen der breitbandigen Bestrahlungsquelle und der Filmbühne ein NIR-Sperrfilter angeordnet. Dieser verhindert die Bestrahlung des Fotodetektors mit nahem Infrarot.

In einer weiteren bevorzugten Ausführungsform umfasst der Film-Scanner eine NIR-Beleuchtungsquelle, die einen weiteren Lichtdurchlass ausleuchtet, wobei der Lichtdurchlass optisch auf einem NIR-Sensor abgebildet wird. Der NIR-Sensor dient dabei zur Kratzer-Detektion und/oder zur Perforationslocherkennung.

Dabei ist der NIR-Sensor beispielsweise als RGB-Zeilensensor ausgebildet. Dies ist deshalb möglich, da die handelsüblichen Filter für RGB-Zeilensensoren im NIR-Bereich transparent sind.

In einer weiteren bevorzugten Ausführungsform ist die Taktung der photosensitiven Fotodetektoren zum Filmtransport synchronisiert. Weiter vorzugsweise wird anhand einer Perforationslocherkennung eine Schrumpfung des Filmmaterials erfasst und die Synchronisation adaptiv nachgeregelt. Unter Kenntnis des Durchmessers des Filmmaterials (Capstan-Rolle) und der absoluten Synchronisation durch die Perforationslöcher kann der Zeilensensor die Filmschrumpfung bestimmen. Diese Bestimmung basiert auf der Tatsache, dass der Capstan auf einem bekannt geschrumpften Film in seinem Durchmesser eine ebenfalls als bekannt vorausgesetzte Anzahl von Scannzeilen synchronisiert. Die Bestimmung der Schrumpfung basiert auf der Differenz der tatsächlichen Anzahl von Zeilen zu der Anzahl von erwarteten Zeilen. Auf Basis dieses Schrumpfungsmaßes wird ein Schätzalgorithmus angelernt, der in der Lage ist, die Synchronisation adaptiv zu regeln. Die Perforationslocherkennung erfolgt dabei vorzugsweise durch eine kombinierte mechanische und optische Messung der Perforationslöcher, wo die mechanische Messung durch einen Inkremental-Geber an der Capstan-Rolle und die optische Messung über den NIR-Zeilensensor erfolgt.

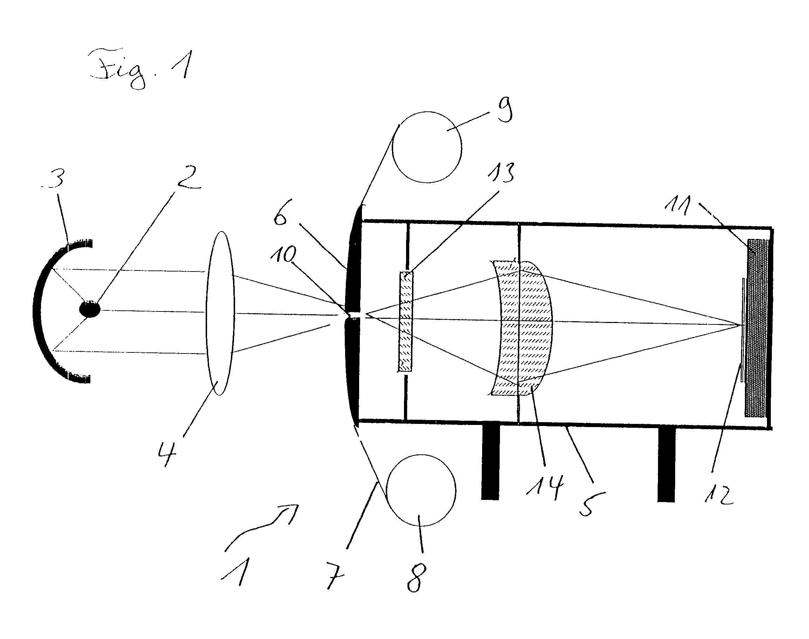

Die Erfindung wird nachfolgend anhand eines bevorzugten Ausführungsbeispieles näher erläutert. Die einzige Figur zeigt eine schematische Darstellung des erfindungsgemäßen Film-Scanners.

Der Film-Scanner 1 umfasst eine breitbandige Bestrahlungsquelle 2 mit einem Reflektor 3, ein erstes Objektiv 4 und ein Gehäuse 5. Auf dem Gehäuse 5 ist eine Filmbühne 6 angeordnet, über die der Film 7 mittels der Antriebsrollen 8, 9 transportiert wird.

Die Filmbühne 6 ist dabei exakt mechanisch mit dem Gehäuse 5 verbunden. Die Filmbühne 6 weist dabei einen spaltförmigen Lichtdurchlass 10 auf, der von der vorzugsweise streifenförmigen Bestrahlungsquelle 2 ausgeleuchtet wird. Auf der Bodenfläche des Gehäuses 5 ist eine Fokalebene 11 angeordnet, die zwei RGB-Zeilensensoren umfasst. Dabei ist der eine RGB-Zeilensensor in der optischen Achse angeordnet, wobei die Zeilen parallel zum Lichtdurchlass 10 ausgerichtet sind. Der spaltförmige Lichtdurchlass 10 sowie die Zeilen des RGB-Zeilensensors sind dabei quer zur Transportrichtung des Filmes 7 angeordnet. Auf der Fokalebene 11 ist ein RGB-Filter 12 für die Zeilensensoren angeordnet, wobei jeder Zeile ein Filter zugeordnet ist. Der zweite RGB-Zeilensensor dient als NIR-Sensor. Hierzu wird ein zweiter Lichtdurchlass durch eine NIR-Lichtquelle, die beispielsweise als NIR-LED ausgebildet ist, ausgeleuchtet, wobei der Lichtdurchlass optisch auf den zweiten RGB-Zeilensensor abgebildet wird. Dabei sind die NIR-Lichtquelle, der zweite Lichtdurchlass und der zweite RGB-Zeilensensor seitlich versetzt zur optischen Achse angeordnet. In dem Gehäuse 5 sind weiter ein Graufiltereinschub 13 und ein zweites Objektiv 14 angeordnet. Mittels des Graufilters kann ein Abgleich der Bestrahlungsquelle 2 erfolgen, um die Beleuchtungsstärke derart einzustellen, dass die radiometrische Auflösung des RGB-Zeilensensors vollständig ausgenutzt werden kann. Während dieser Anpassung übernimmt der Graufilter die Funktion des Filmes 7, da diese gleiche Transmissionswerte aufweisen. Nach der Einstellung der Bestrahlungsquelle 2 wird dann der Graufilter entfernt. Das Objektiv 14 bildet den Lichtdurchlass 10 auf den RGB-Zeilensensor in der optischen Achse ab. Dabei ist das Objektiv 14 starr mit der Filmbühne 6 verbunden. Hierzu ist das Objektiv 14 entweder mit dem Gehäuse 5 und/oder direkt mit der Filmbühne 6 verbunden. In einer bevorzugten Ausführungsform ist das Gehäuse zweiteilig ausgebildet, wobei ein Gehäuseteil starr mit der Filmbühne 6 und dem Objektiv 14 verbunden ist. Dieser Gehäuseteil wird dann lösbar, aber reproduzierbar mit einem zweiten Gehäuseteil verbunden, das die Fokalebene 11 trägt. Der Filmtransport ist dann mit der Taktung der RGB-Zeilen synchronisiert und die analogen Pixelwerte werden anschließend digitalisiert, verarbeitet und abgespeichert.

## Patentansprüche

1. Film-Scanner (1), umfassend eine breitbandige Bestrahlungsquelle (2) und eine Filmbühne (6), wobei die Filmbühne (6) mindestens einen Lichtdurchlass (10) für einen sichtbaren Spektralkanal aufweist und der Lichtdurchlass (10) auf mindestens einen photosensitiven Fotodetektor ausgerichtet ist, der photosensitive Fotodetektor in einem Gehäuse (5) angeordnet ist, wobei die Filmbühne (6) über eine reproduzierbare, lösbare Verbindung oder eine feste, starre Verbindung mit dem Gehäuse (5) verbunden ist, in dem Gehäuse (5) ein Objektiv (14) angeordnet ist, mittels dessen der mindestens eine Lichtdurchlass (10) optisch auf dem mindestens einen photosensitiven Fotodetektor abgebildet wird, wobei das Objektiv (14) starr mit dem Gehäuse (5) und/oder der Filmbühne (6) verbunden ist.

2. Film-Scanner nach Anspruch 1, **dadurch gekennzeichnet, dass** der photosensitive Fotodetektor als RGB-Zeilensensor ausgebildet ist.

3. Film-Scanner nach einem der vorangegangenen Ansprüche, **dadurch gekennzeichnet, dass** den photosensitiven Fotodetektoren breitbandige Filter (12) für Rot, Grün und Blau zugeordnet sind, die der Augenempfindlichkeit angepasst sind.

4. Film-Scanner nach einem der vorangegangenen Ansprüche, **dadurch gekennzeichnet, dass** in dem Gehäuse (5) zwischen der Filmbühne (6) und dem photosensitiven Fotodetektor ein Graufilter-Einschub (13) angeordnet ist.

5. Film-Scanner nach einem der vorangegangenen Ansprüche, **dadurch gekennzeichnet, dass** zwischen der breitbandigen Bestrahlungsquelle (2) und der Filmbühne (6) ein NIR-Sperrfilter angeordnet ist.

6. Film-Scanner nach einem der vorangegangenen Ansprüche, **dadurch gekennzeichnet, dass** der Film-Scanner (1) eine NIR-Beleuchtungsquelle umfasst, die einen weiteren Lichtdurchlass ausleuchtet, wobei der Lichtdurchlass optisch auf einem NIR-Sensor abgebildet wird.

7. Film-Scanner nach Anspruch 6, **dadurch gekennzeichnet, dass** der NIR-Sensor als RGB-Zeilensensor ausgebildet ist.

8. Film-Scanner nach einem der vorangegangenen Ansprüche, **dadurch gekennzeichnet, dass** die Taktung der photosensitiven Fotodetektoren zum Filmtransport synchronisiert ist.

9. Film-Scanner nach Anspruch 8, **dadurch gekennzeichnet, dass** anhand einer Perforationslocherkennung eine Schrumpfung des Filmmaterials erfassbar ist und die Synchronisierung adaptiv nachregelbar ist.
